# EUROPEAN PATENT SPECIFICATION

(11) **EP 3 315 550 B1**
(45) Date of publication and mention of the grant of the patent: **01.07.2020**
(21) Application number: 16207313.4
(22) Date of filing: 29.12.2016
(51) Int. Cl.: C08L 23/06, C08L 23/08, C08L 23/12, E06B 9/15, C08K 3/26

(54) **ENVIRONMENT-FRIENDLY MATERIAL AND WINDOW COVERING SLAT MADE OF THE SAME**
UMWELTFREUNDLICHES MATERIAL UND DARAUS HERGESTELLTE FENSTERABDECKUNGSLAMELLE
MATÉRIAU ÉCOLOGIQUE ET LATTE DE COUVERTURE DE FENÊTRE AINSI CONSTITUÉE

(30) Priority: 01.11.2016 TW 105135327
(43) Date of publication of application: 02.05.2018
(73) Proprietor: Chen, Chin-Fu, Taichung City 407 (TW)
(72) Inventor: CHEN, Hung-Hao, 407 TAICHUNG CITY (TW); CHEN, Jong-WU, 407 TAICHUNG CITY (TW); TSAI, Ming-Che, 407 TAICHUNG CITY (TW)
(74) Representative: Straus, Alexander

(56) References cited:
- EP-A2- 0 207 734
- WO-A1-2016/137558
- WO-A2-2006/101932
- AU-A1- 2009 213 063
- US-A1- 2006 052 511
- US-A1- 2006 128 870
- US-A1- 2008 027 161
- DATABASE WPI Week 201519 Thomson Scientific, London, GB; AN 2015-156815 XP002771784, -& CN 104 292 624 A (SUZHOU BOLIMAI NEW MATERIAL TECHNOLOGY) 21 January 2015 (2015-01-21)

## Description

### BACKGROUND OF THE INVENTION

### Field of the Invention

The present invention relates to an environment-friendly material, and in particular to a material which is suitable for making window covering slat.

### Description of the Prior Art

Window coverings are utilized to alternatively shade the light or allow the light to pass through windows. Conventionally, window coverings such as window shades or window blinds are provided with window covering slats which are framed, railed, or hung next to windows. The slats can be assembled in several kinds of methods and orientations. Therefore, there are vertical blind, horizontal blind, and several styles of shades on the market for consumers to choose from.

In view of the material of the slats, wooden slats are usually preferred in the past in providing light sheltering and heat isolating functions. However, the wood resource is going exhausted. Wooden product is getting expensive and leading frequently to habitat destruction and environment protection issues.

Besides the wooden slats, there are plastic slats provided as another choice. However, plastic slats are usually made of polyvinylchloride (PVC). If the old window coverings or the slats inside are abandoned without sorting properly, the slats will be carried in trash or flammable trash. Dioxin would be produced in incineration.

Taiwan patent No. 379272 reveals a manufacturing method of environment-friendly paper which is made from inorganic mineral powder, polyethylene, and auxiliary additives. The raw material is relatively friendly to the environment. However, the product with considerably low toughness is not ideal for window covering slats.

Therefore, to the window covering manufacturer, new environment-friendly and affordable material which performs suitable mechanical properties is still welcomed.

### SUMMARY OF THE INVENTION

One object of the present invention is to provide a new material for window covering slats for the manufacturers and the consumers to choose.

Another object of the present invention is to reduce the environmental impact of window coverings.

Another object of the present invention is to make the cost of the material of window coverings lower or acceptable.

To achieve the above and other objects, one embodiment of the present invention provides an environment-friendly material, comprising 60 to 80 wt% of inorganic mineral pellet, 15 to 35 wt% of polyolefin whose precursor monomer has 2 or 3 carbon atoms on its backbone chain, and 5 to 10 wt% of auxiliary additive. The inorganic mineral pellet comprises calcium carbonate and polyethylene or polypropylene. A weight ratio of the calcium carbonate and the polyethylene or the polypropylene comprised in the inorganic mineral pellet is 8:2. The polyolefin is linear low density polyethylene, low density polyethylene, medium density polyethylene, high density polyethylene, or polypropylene. The auxiliary additive is POE, POE-g-MA, or PE-g-MA.

To achieve the above and other objects, another embodiment of the present invention provides an environment-friendly material comprising 80 wt% of inorganic mineral pellet and 20 wt% of polyolefin whose precursor monomer has 2 or 3 carbon atoms on its backbone chain. The inorganic mineral pellet comprises calcium carbonate and polyethylene or polypropylene. A weight ratio of the calcium carbonate and the polyethylene or the polypropylene comprised in the inorganic mineral pellet is 8:2. The polyolefin is linear low density polyethylene, low density polyethylene, medium density polyethylene, high density polyethylene, or polypropylene.

To achieve the above and other objects, another embodiment of the present invention provides an environment-friendly material, composed of 60 to 80 wt% of inorganic mineral pellet, 15 to 35 wt% of polyolefin whose precursor monomer has 2 or 3 carbon atoms on its backbone chain, and 5 to 10 wt% of auxiliary additive. The inorganic mineral pellet comprises calcium carbonate and polyethylene or polypropylene. A weight ratio of the calcium carbonate and the polyethylene or the polypropylene comprised in the inorganic mineral pellet is 8:2. The polyolefin is linear low density polyethylene, low density polyethylene, medium density polyethylene, high density polyethylene, or polypropylene. The auxiliary additive is POE, POE-g-MA, or PE-g-MA.

To achieve the above and other objects, another embodiment of the present invention provides a window covering slat, which is made of the environment-friendly material described above.

Accordingly, the environment-friendly material of the present invention can be utilized for producing window covering slats. The slats are then PVC-free slats. The issues caused by using PVC are no longer existed. In addition, calcium carbonate which is considered as a low cost material is the main ingredient of the environment-friendly material. Cost and mechanical properties of the environment-friendly material are then controllable.

### BRIEF DESCRIPTION OF THE DRAWINGS

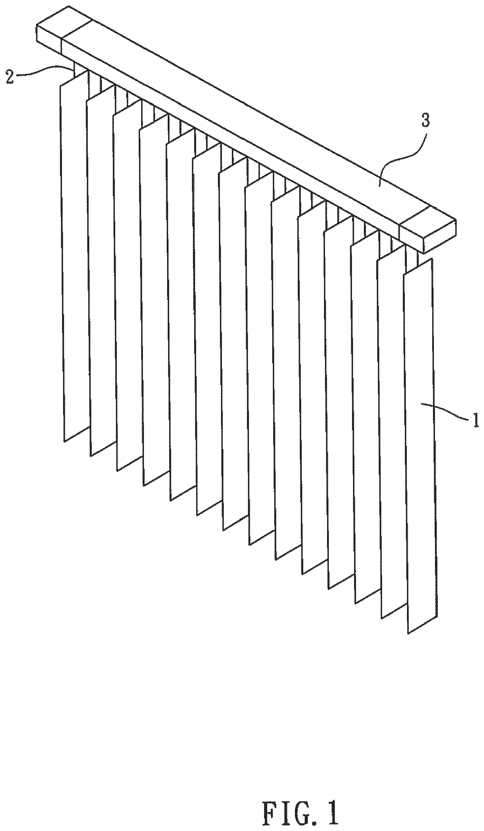

Fig. 1 is a reference drawing showing a window covering with slats of an embodiment of the present invention.

### DETAILED DESCRIPTION OF THE PREFERRED EMBODIMENTS

Please refer to Fig.1 for an embodiment of the present invention. The present embodiment provides an environment-friendly material. Sheets or slats 1 can be made of the environment-friendly material, and may be further manufactured or composed in a window covering such as a vertical blind shown in Fig.1. In the vertical blind, the slats 1 are hung by the ropes 2 under the rail 3. The rail 3 is provided to be installed next to a window. Thus, user can control the position and orientation of the slats to alternatively cover the window. Subject to conditions, the slats made of the environment-friendly material can be utilized in other window coverings, such as horizontal blind or window shade. In addition, plate or cube may also be made of the environment-friendly material and can be utilized as brick, tile, sash, frame, folding screen, decorating plate, or other similar applications.

The environment-friendly material of the embodiment mainly include 60 to 80 wt% (weight percentage) of inorganic mineral pellet, 15 to 35 wt% of polyolefin, and 5 to 10 wt% of optional auxiliary additive.

The inorganic mineral pellet is made of the mixture of 8 parts by weight of calcium carbonate and 2 parts by weight of polyethylene (PE). The mixture of calcium carbonate and polyethylene are solid in room temperature. A weight ratio of the calcium carbonate and the polyethylene comprised in the inorganic mineral pellet is 8:2. Without any further additive, the inorganic mineral pellet is composed of 80 wt% of calcium carbonate and 20 wt% of polyethylene. However, a small amount of impurities may be contained therein. In other possible embodiments of the present invention, the component of polyethylene in the inorganic mineral pellet may be replaced by polypropylene (PP).

The aforementioned polyolefin is made of precursor monomers having 2or 3 carbon atoms on its backbone chain. More particularly, said polyolefin is linear low density polyethylene (LLDPE), low density polyethylene (LDPE), medium density polyethylene (MDPE), high density polyethylene (HDPE), or polypropylene (PP). Among the materials mentioned, linear low density polyethylene, high density polyethylene, and polypropylene are frequently adopted, and linear low density polyethylene is preferred.

The auxiliary additive is polyolefin elastomer (POE), maleic anhydride-grafted polyolefin elastomer (POE-g-MA), or maleic anhydride-grafted polyethylene (PE-g-MA), and maleic anhydride-grafted polyolefin elastomer is preferred.

In addition to the compositions mentioned above, additional additives may be optionally added to provide corresponding functions or properties for particular application conditions. Content of the additional additives should be restricted avoiding significantly changing physical properties and chemical properties of the environment-friendly material. For example, bleach, toner, or pigment may be utilized for bringing the slats a particular color. Antioxidants or anti-ultraviolet agent may be utilized for prolonging life time of the slats. UV absorber can provide an additional function in lowering the UV strength in the rooms. In addition, lubricant, elastic auxiliary agent, and antistatic agent can also be possible additives.

Previously mentioned contents are mixed and pelleted by mixer, or mixed and extruded by mixer-extruder (i.e., twin-screw mixer/extruder). Sheets or pellets of environment-friendly material is then prepared. Window covering slats or other end products are produced by secondary manufacturing, such as molding, cutting, or machining.

The environment-friendly material is tested by impact-resistance test to evaluate the mechanical properties and whether the environment-friendly material is suitable for window covering slats or not. The tested environment-friendly material is firstly mixed and pelleted by twin-screw mixer under 170°C to 210°C. The pelleted environment-friendly material is then extruded by extruder under 180°C. The extruded environment-friendly material is cut into slices in the dimensions of 90mm^{∗} 12mm^{∗}1mm. The prepared examples of the environment-friendly material are tested in impact-resistance test in room temperature. Please refer to the following table 1 for the test results of examples and comparisons tested.

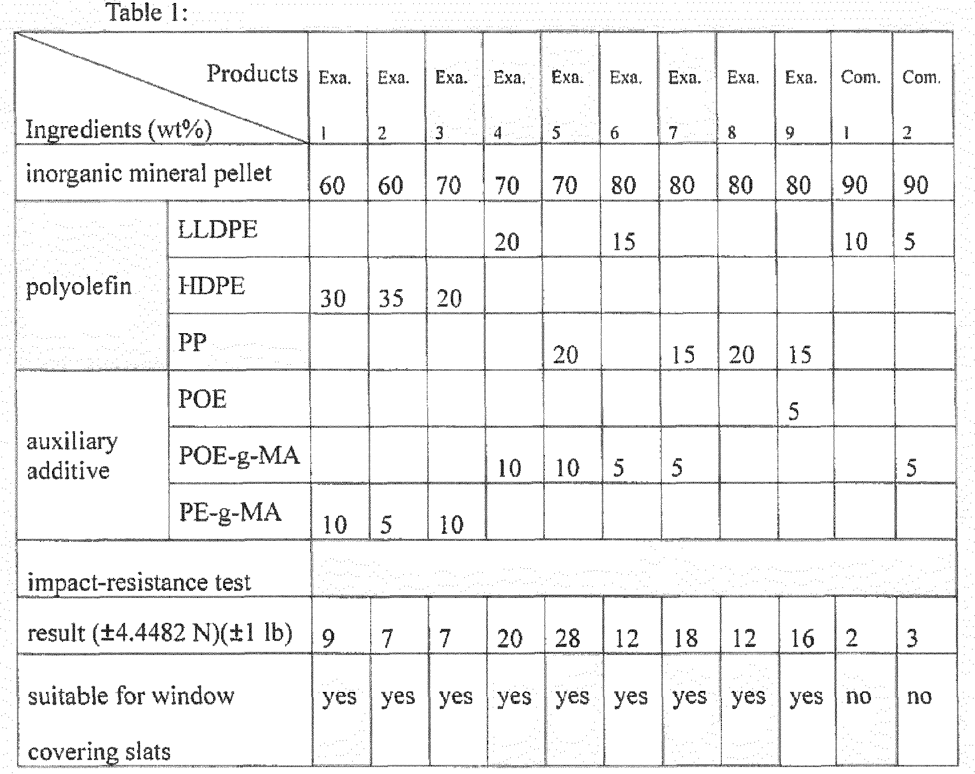

In general use of window covering, we take 31.1375 N (7 lb) of impact-resistance strength as a base requirement of mechanical property of end products. In the previous result of impact-resistance test, we found that all examples of the environment-friendly material pass the 31.1375 N (7 lb) test. In the comparisons, the inorganic mineral pellet is of higher weight percentage, and the results are significantly lower than 31.1375 N (7 lb). The comparisons are not suitable for window covering slats.

In addition, in comparisons of examples 3 and 4, we can find that impact-resistance strength of the example with LLDPE and POE-g-MA is significantly higher than that of the example with HDPE and PE-g-MA.

In comparisons of examples 4, 5 and 6, 7, we can find that the material would perform good impact-resistance when the polyolefin is PP or LLDPE.

In comparisons of examples 1 and 3, higher inorganic mineral pellet and lower PE would lead to lowered impact-resistance, from 40.0339 N (9 lb) to 31.1375 N (7 lb).

In comparisons of examples 7 and 8, POE-g-MA could cause an increase of impact-resistance, from 53.3786 N (12 lb) to 80.0679 N (18 lb).

In comparisons of examples 7 and 9, grafted POE-g-MA brings better performance than un-grafted POE. However, the example 9 with POE is still better than the example 8 which has no auxiliary additive.

In view of comparisons 1 and 2, POE-g-MA could bring merely 4.4482 N (1 lb) increase, from 8.8964 N (2 lb) to 13.3446 N (3 lb), when the composition of the inorganic mineral pellet is overly raised to 90%.

In the tests and results mentioned above, only example materials with LLDPE, HDPE, and PP are tested. However, LDPE, MDPE, and HDPE have similar properties. It is expected that the material will still be suitable for window covering slats when the HDPE is replaced by LDPE or MDPE.

In conclusion, the environment-friendly material performs proper mechanical properties for window covering slats. PVC is therefore not necessary for making window covering. Dioxin issues are then relieved. The environment-friendly material has a main ingredient of calcium carbonate. Thus, cost of products of the environment-friendly material can be easily controlled.

## Claims

1. An environment-friendly material, comprising:
60 to 80 wt% of inorganic mineral pellet, said inorganic mineral pellet comprising calcium carbonate and polyethylene or polypropylene, wherein a weight ratio of the calcium carbonate and the polyethylene or the polypropylene comprised in the inorganic mineral pellet is 8:2;
15 to 35 wt% of polyolefin whose precursor monomer has 2 or 3 carbon atoms on its backbone chain, wherein said polyolefin is linear low density polyethylene, low density polyethylene, medium density polyethylene, high density polyethylene, or polypropylene;
5 to 10 wt% of auxiliary additive, wherein said auxiliary additive is POE, POE-g-MA, or PE-g-MA.

2. The environment-friendly material of claim 1, wherein said polyolefin is linear low density polyethylene, high density polyethylene, or polypropylene.

3. The environment-friendly material of claim 1, wherein said polyolefin is linear low density polyethylene or polypropylene.

4. The environment-friendly material of claim 1, wherein said auxiliary additive is POE-g-MA.

5. A window covering slat, which is made of the environment-friendly material of claim 1.

6. The window covering slat of claim 5, wherein said polyolefin is linear low density polyethylene, high density polyethylene, or polypropylene.

7. The window covering slat of claim 5, wherein said polyolefin is linear low density polyethylene or polypropylene.

8. The window covering slat of claim 5, wherein said auxiliary additive is POE-g-MA.

9. An environment-friendly material, comprising:
80 wt% of inorganic mineral pellet, said inorganic mineral pellet comprising calcium carbonate and polyethylene or polypropylene, wherein a weight ratio of the calcium carbonate and the polyethylene or the polypropylene comprised in the inorganic mineral pellet is 8:2;
20 wt% of polyolefin whose precursor monomer has 2 or 3 carbon atoms on its backbone chain, wherein said polyolefin is linear low density polyethylene, low density polyethylene, medium density polyethylene, high density polyethylene, or polypropylene.

10. The environment-friendly material of claim 9, wherein said polyolefin is linear low density polyethylene, high density polyethylene, or polypropylene.

11. The environment-friendly material of claim 9, wherein said polyolefin is linear low density polyethylene or polypropylene.

## Patentansprüche

1. Umweltfreundliches Material, welches umfasst:
60 bis 80 Gew.-% eines anorganischen Mineralpellets, worin das anorganische Mineralpellet Calciumcarbonat und Polyethylen oder Polypropylen umfasst, worin ein Gewichtsverhältnis des in dem anorganischen Mineralpellet enthaltenen Calciumcarbonats und des Polyethylens oder des Polypropylens 8:2 ist;
15 bis 35 Gew.-% Polyolefin, dessen Vorläufermonomer 2 oder 3 Kohlenstoffatome auf seiner Gerüstkette aufweist, worin das Polyolefin lineares niedrigdichtes Polyethylen, niedrigdichtes Polyethylen, mitteldichtes Polyethylen, hochdichtes Polyethylen, oder Polypropylen ist;
5 bis 10 Gew.-% eines Hilfsstoffes, worin der Hilfsstoff POE, POE-g-MA, oder PE-g-MA ist.

2. Umweltfreundliches Material nach Anspruch 1, worin das Polyolefin lineares niedrigdichtes Polyethylen, hochdichtes Polyethylen, oder Polypropylen ist.

3. Umweltfreundliches Material nach Anspruch 1, worin das Polyolefin lineares niedrigdichtes Polyethylen oder Polypropylen ist.

4. Umweltfreundliches Material nach Anspruch 1, worin der Hilfsstoff POE-g-MA ist.

5. Fenster-Decklamelle, welche aus umweltfreundlichem Material nach Anspruch 1 gefertigt ist.

6. Fenster-Decklamelle nach Anspruch 5, worin das Polyolefin lineares niedrigdichtes Polyethylen, hochdichtes Polyethylen, oder Polypropylen ist.

7. Fenster-Decklamelle nach Anspruch 5, worin das Polyolefin lineares niedrigdichtes Polyethylen oder Polypropylen ist.

8. Fenster-Decklamelle nach Anspruch 5, worin der Hilfsstoff POE-g-MA ist.

9. Umweltfreundliches Material, welches umfasst:
80 Gew.-% eines anorganischen Mineralpellets, worin das anorganische Mineralpellet Calciumcarbonat und Polyethylen oder Polypropylen umfasst, worin ein Gewichtsverhältnis des in dem anorganischen Mineralpellet enthaltenen Calciumcarbonats und des Polyethylens oder des Polypropylens 8:2 ist;
20 Gew.-% Polyolefin, dessen Vorläufermonomer 2 oder 3 Kohlenstoffatome auf seiner Gerüstkette aufweist, worin das Polyolefin lineares niedrigdichtes Polyethylen, niedrigdichtes Polyethylen, mitteldichtes Polyethylen, hochdichtes Polyethylen, oder Polypropylen ist.

10. Umweltfreundliches Material nach Anspruch 9, worin das Polyolefin lineares niedrigdichtes Polyethylen, hochdichtes Polyethylen, oder Polypropylen ist.

11. Umweltfreundliches Material nach Anspruch 9, worin das Polyolefin lineares niedrigdichtes Polyethylen oder Polypropylen ist.

## Revendications

1. Matériau respectueux de l'environnement, comprenant :
60 à 80% en poids de pastilles minérales inorganiques, lesdites pastilles minérales inorganiques comprenant du carbonate de calcium et du polyéthylène ou du polypropylène, un rapport en poids du carbonate de calcium au polyéthylène ou au polypropylène compris dans les pastilles minérales inorganiques étant de 8:2 ;
15 à 35% en poids de polyoléfine, dont le monomère précurseur présente 2 ou 3 atomes de carbone sur sa chaîne principale, ladite polyoléfine étant un polyéthylène basse densité linéaire, un polyéthylène basse densité, un polyéthylène moyenne densité, un polyéthylène haute densité ou un polypropylène ;
5 à 10% en poids d'additif auxiliaire, ledit additif auxiliaire étant un POE, un POE-g-MA ou un PE-g-MA.

2. Matériau respectueux de l'environnement selon la revendication 1, ladite polyoléfine étant un polyéthylène basse densité linéaire, un polyéthylène haute densité ou un polypropylène.

3. Matériau respectueux de l'environnement selon la revendication 1, ladite polyoléfine étant un polyéthylène basse densité linéaire ou un polypropylène.

4. Matériau respectueux de l'environnement selon la revendication 1, ledit additif auxiliaire étant un POE-g-MA.

5. Lamelle d'habillage de fenêtre, qui est constituée du matériau respectueux de l'environnement selon la revendication 1.

6. Lamelle d'habillage de fenêtre selon la revendication 5, ladite polyoléfine étant un polyéthylène basse densité linéaire, un polyéthylène haute densité ou un polypropylène.

7. Lamelle d'habillage de fenêtre selon la revendication 5, ladite polyoléfine étant un polyéthylène basse densité linéaire ou un polypropylène.

8. Lamelle d'habillage de fenêtre selon la revendication 5, ledit additif auxiliaire étant un POE-g-MA.

9. Matériau respectueux de l'environnement, comprenant :
80% en poids de pastilles minérales inorganiques, lesdites pastilles minérales inorganiques comprenant du carbonate de calcium et du polyéthylène ou du polypropylène, un rapport en poids du carbonate de calcium au polyéthylène ou au polypropylène compris dans les pastilles minérales inorganiques étant de 8:2 ;
20% en poids de polyoléfine dont le monomère précurseur présente 2 ou 3 atomes de carbone sur sa chaîne principale, ladite polyoléfine étant un polyéthylène basse densité linéaire, un polyéthylène basse densité, un polyéthylène moyenne densité, un polyéthylène haute densité ou un polypropylène.

10. Matériau respectueux de l'environnement selon la revendication 9, ladite polyoléfine étant un polyéthylène basse densité linéaire, un polyéthylène haute densité ou un polypropylène.

11. Matériau respectueux de l'environnement selon la revendication 9, ladite polyoléfine étant un polyéthylène basse densité linéaire ou un polypropylène.
